# EUROPEAN PATENT APPLICATION

(11) **EP 3 273 663 A1**
(43) Date of publication of application: **24.01.2018**
(21) Application number: 16195407.8
(22) Date of filing: 25.10.2016
(51) Int. Cl.: H04L 29/08

(54) **METHOD AND ASSOCIATED APPARATUS FOR ACCESSING WEB SERVER**

(30) Priority: 19.07.2016 TW 105122786
(71) Applicant: Synology Incorporated, Taipei 103 (TW)
(72) Inventor: Chen, Kan-Yueh, 338 Taoyuan City (TW); Hsiao, Ping-Che, 114 Taipei City (TW); Liu, Jia-Yu, 238 New Taipei City (TW)
(74) Representative: Becker Kurig Straus

(57) **Abstract**

A method for accessing a web server (134) and an associated apparatus are provided, where the web server (134) is in a local area network. The method includes: utilizing a wake-on-LAN agent device (132) to obtain web server information of the web server (134) and send the web server information to a reverse proxy server (120). When the reverse proxy server (120) receives a request from a client device (110), the method utilizes the reverse proxy server (120) to determine whether to assign a wake-on-LAN task to the wake-on-LAN agent device (132) according to at least one state of the web server (134), in which the WOL task includes waking the web server (134). The client device (110) then sends the request to the reverse proxy server (120), in order to access the web server (134) through the reverse proxy server (120).

## Description

The present invention relates to waking and access control of a web server, and more particularly, to a method and associated apparatus for accessing a web server.

A personal computer (PC) configured in a local area network (LAN) may enter a non-operating state. When it is woken by other devices in the LAN, the PC re-enters an operating state from the non-operating state. Some problems may occur under this design. For example, one problem is that the waking mechanism can only be used by devices in the same LAN. Attempts to solve this problem have resulted in unwanted side effects being introduced. Hence, there is a need for a novel method and associated scheme.

This in mind, the application aims at providing a method and apparatus in order to solve the abovementioned problems.

This is achieved by a method and associated device for accessing a web server according to claims 1 and 11. The dependent claims pertain to corresponding further developments and improvements.

As will be seen more clearly from the detailed description following below, the claimed method includes: utilizing a wake-on-LAN (WOL) agent device to obtain web server information of the web server, and send the web server information to a reverse proxy server, in which the WOL agent device is configured in the LAN, and the web server information includes at least one state of the web server; and when the reverse proxy server receives a request from a client device, utilizing the reverse proxy server to determine whether to assign a WOL task to the WOL agent device according to at least one state of the web server, in which the client device is configured external to the LAN, and the WOL task includes waking up the web server. The client device sends the request to the reverse proxy server, in order to access the web server through the reverse proxy server.

In addition, the claimed apparatus includes at least one control circuit positioned in a subsystem of a network system. The subsystem includes a wake-on-LAN (WOL) agent device and a reverse proxy server. The WOL agent device is configured in the LAN, and the control circuit is arranged to control operations of at least one of the WOL agent device and the reverse proxy server. The WOL agent device obtains web server information of the web server, and sends the web server information to the reverse proxy server, in which the web server information includes at least one state of the web server. When the reverse proxy server receives a request from a client device, the reverse proxy server refers to the state of the web server to decide whether to assign a WOL task to the WOL agent device, in which the client device is positioned external to the LAN. The WOL task includes waking up the web server, and the client device sends the request to the reverse proxy server in order to access the web server through the reverse proxy server.

In the following, the invention is further illustrated by way of example, taking reference to the accompanying drawings. Thereof:
Fig. 1 is a diagram illustrating a network system according to an embodiment of the present invention;
Fig. 2 is a diagram illustrating a web server information updating operation of the notification channel shown in Fig. 1 according to an embodiment of the present invention;
Fig. 3 is a diagram illustrating a work flow of the network system shown in Fig. 1 according to an embodiment of the present invention; and
Fig. 4 is a diagram illustrating a work flow of the network system shown in Fig. 1 according to another embodiment of the present invention.

The embodiments of the present invention provide a method and an associated apparatus for accessing a web server, allowing a user to browse a web server previously in a non-operating state (e.g. a sleep state or a power off state). Based on a scheme of the present invention, the user may input a specific web address on the web address bar to allow the browser to automatically operate in response to the current state of the web server. For example, the browser may refer to the current state of the web server to decide whether to wake up the web server. In another example, the browser may refer to the current state of the web server to decide whether to show the web page to the client end. In addition, the client device does not need to install other applications, and does not need to apply complicated settings. The client device may complete the remote waking and browse the web page just by using the browser.

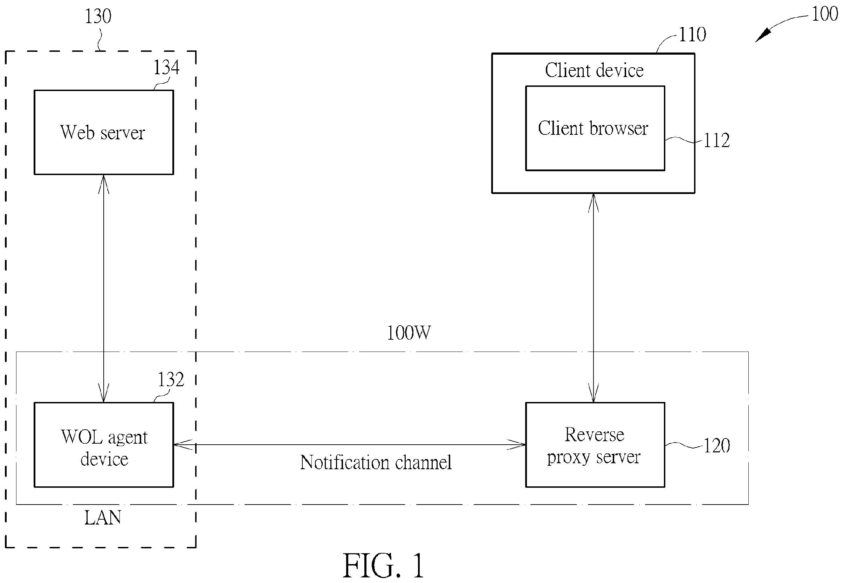

Fig. 1 is a diagram illustrating a network system 100 according to an embodiment of the present invention. The network system 100 may include a client device 110, a reverse proxy server 120 and a local area network (LAN) 130, in which a wake-on-LAN (WOL) mechanism may be configured in the LAN 130. Examples of the client device 110 may include (but are not limited to): a multifunctional mobile phone, tablet, wearable device, laptop PC, and desktop PC. According to this embodiment, the network system 100 may include a WOL agent device 132 and a web server 134. The WOL agent device 132 and the web server 134 are configured in the LAN 130. Examples of the WOL agent device 132 may include (but are not limited to): a router, PC, and an electronic device having the WOL function. As shown in Fig. 1, the network system 100 may include a notification channel which is positioned between the reverse proxy server 120 and the WOL agent device 132. Further, the client device 110 in this embodiment may provide a browser 112 (denoted as the client browser in Fig. 1 for better understanding) to the user of the client device 110, in order to allow the user to browse web pages (e.g. one or more web pages on the web server 134) through the browser 112, in which the client device 110 may execute program codes on the browser 112 for displaying the browser 112.

According to this embodiment, the aforementioned apparatus for accessing a web server may include at least one portion (e.g. part or all) of the network system 100, such as a subsystem 100W in the network system 100, or any portion of the subsystem 100W (e.g. the reverse proxy server 120 or the WOL agent device 132). As shown in Fig. 1, the subsystem 100W may include the reverse proxy server 120 and the WOL agent device 132, and may also include the notification channel between the reverse proxy server 120 and the WOL agent device 132. When the web server 134 enters the non-operating state, the WOL agent device 132 may send a predetermined package such as a WOL package. More particularly, when the predetermined package is broadcasted, the web server 134 will enter the operating state from the non-operating state, in which the predetermined package may carry the media access control (MAC) address (or physical address) of the web server 134. For example, under the situation where the web server 134 is in the sleep state, when the web server 134 receives the predetermined package, the web server 134 will be woken up. In another example, when the web server 134 is in the power off state, when the web server 134 receives the predetermined package, the web server 134 may automatically power on, and thus enter the power on state from the power off state. Further, the aforementioned WOL mechanism may be extended out of the LAN 130 through the notification channel, and more particularly, may be extended out of the reverse proxy server 120. Note that the reverse proxy server 120 is an electronic device being external to the client device 110, rather than any sub-circuit or internal component in the client device 110. For example, the reverse proxy server 120 may be configured external to the client device 110.

Based on the above design, the client device 110 does not require additional complicated settings or other applications. The client device 110 only requires the browser 112 to automatically complete the remote waking operation and browse the web page. The browser 112 may refer to the current state of the web server 134 to decide whether to wake up the web server 134. For example, under the situation where the web server 134 is not in the non-operating state, the state of the web server 134 may be viewed as ready. In this way, the browser 112 may utilize the reverse proxy server 120 to access the web server 134 in order to display the web page on a display module (e.g. a touch screen) of the client device 110, for the user to browse. In another example, under the situation where the web server 134 is in the non-operating state, the browser 112 may utilize the subsystem 100W to trigger the web server 134 in order to enter the operating state from the non-operating state. When the web server 134 is ready, the reverse proxy server 120 will obtain the latest state of the web server 134, such as a "ready state". Hence, the reverse proxy server 120 may automatically power on to send a request for accessing the web page to the web server 134. After the reverse proxy server 120 obtains the response from the web server 134, the reverse proxy server 120 will forward the response to the browser 112. Hence, the browser 112 may utilize the subsystem 100W to automatically power on to wake up and access the web server 134 in order to display the web page on the display module (e.g. the touch screen) of the client device 110, for the user to browse. Based on the scheme of the present invention, the browser 112 does not need to continuously perform polling upon the web server 134. This is because the reverse proxy server 120 may obtain the latest state of the web server 134 through the notification channel, and may automatically power on to complete the follow-up operations. The scheme of the present invention may effectively raise the overall efficiency without continuously performing polling, thus preventing the issue of wasting network bandwidth. Compared with related arts, the scheme of the present invention may properly solve existing problems without introducing unwanted side effects.

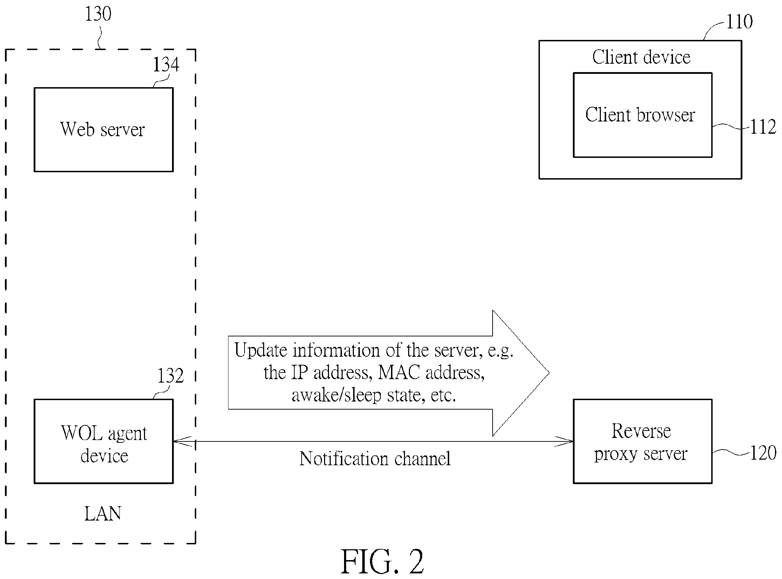

Fig. 2 is a diagram illustrating a web server information updating operation of the notification channel shown in Fig. 1 according to an embodiment of the present invention. Since the WOL agent device 132 and the web server 134 may be configured in the same LAN, such as the LAN 130, the WOL agent device 132 may easily monitor the latest state of the web server 134. The WOL agent device 132 may obtain various kinds of information of the web server 134, such as the Internet protocol (IP) address of the web server 134, media access control (MAC) address of the web server 134, and the operating state/non-operating state (e.g. the power on/off state) of the web server 134, etc. The information mentioned above may collectively be called the web server information. The WOL agent device 132 may perform the web server information updating operation in order to inform the reverse proxy server 120 of the latest web server information of the web server 134 through the notification channel. The reverse proxy server 120 can thereby obtain the latest web server information of the web server 134 through the notification channel. Note that the latest web server information may include the IP address, MAC address, and operating/non-operating state of the web server 134, in which the operating/non-operating state and IP address may change with time, but the MAC address usually does not. For example, when the IP address of the web server 134 is a dynamic IP address, the IP address of the web server 134 may change with time, but when the IP address of the web server 134 is a static IP address, the IP address of the web server 134 does not change with time.

According to this embodiment, the user may manually add, remove and modify a plug-in program module of the browser 112. For example, a predetermined plug-in program module may be installed on the browser 112. When one or more conditions are satisfied, the browser 112 may be connected to the reverse proxy server 120, and access the web page on the web server 134 through the reverse proxy server 120, such as a target web page. Examples of the conditions may include (but are not limited to): whether the user inputs one or more predetermined web addresses on the web address bar, and whether the user inputs one or more predetermined domains on the web address bar. For example, when the user inputs a web address "any_string.domain_name" (e.g. the web address in the format of *.a.b, in which the symbol a.b may represent a predetermined domain domain_name, and the symbol * may represent one predetermined string such as the string "any_string" to indicate the target web page) having a predetermined domain "domain_name" on the browser 112, or enters a web address having a predetermined domain "domain_name/any_string" (e.g. the web address in the format of a.b/*; in which the symbol "a.b" may represent predetermined domain_name, and the symbol "*" may represent a predetermined string such as the string "any_string", in order to indicate the target web page), the browser 112 may be connected to the reverse proxy server 120 in a default manner, and access the web page on the web server 134 through the reverse proxy server 120, such as the web page represented by the web address "any_string.domain_name" or "domain_name/any_string". In another example, when the user inputs predetermined domain_name (e.g. a domain in the form of "a.b") on the web address bar of the browser 112, but has not yet input the entire web address domain_name/any_string (e.g. the web address in the form of "a.b/*") having the predetermined domain_name, the browser 112 may be connected to the reverse proxy server 120 in a default manner, and trigger the web server 134 to enter the operating state from the non-operating state through the reverse proxy server 120, so that the web server 134 is ready as soon as possible. Further, the web server 134 may arbitrarily enter the sleep or power off state. When the web server 134 enters the sleep or power off state, the WOL agent device 132 will broadcast the predetermined package (such as a WOL package) in order to wake up the web server 134 or power on the web server 134, in which the browser 112 only needs to communicate with the reverse proxy server 120, and will not be involved in the above operations of the reverse proxy server 120 (e.g. waking up or powering on the web server 134). In practice, the WOL agent device 132 and the web server 134 may be configured in the same LAN, such as the LAN 130, but the present invention does not limit the location of the reverse proxy server 120. The reverse proxy server 120 and the web server 134 may be configured in the same LAN, such as the LAN 130. In another example, the reverse proxy server 120 may be configured in the Internet, rather than in the LAN 130.

According to some embodiments, the aforementioned method for accessing a web server may include: performing at least one portion of the web server information updating operation shown in Fig. 2. Some features in this embodiment similar to those in the above embodiments/modifications are omitted here for brevity.

According to some embodiments, a plurality of web servers may be configured in the LAN 130, such as a plurality of web servers {134} which include the web server 134 mentioned in the embodiment of Fig. 2. The WOL agent device 132 may utilize the notification channel to report the state of the web servers {134} in the same LAN (e.g. all web servers in the LAN 130) to the reverse proxy server 120. Note that the latest web server information of each of the web servers {134} may include the IP address, MAC address, and the operating state/non-operating state (e.g. the power on/off state) of each of the web servers {134}. In addition, regarding any of the web servers {134}, the reverse proxy server 120 may also assign corresponding waking up tasks to the WOL agent device 132 through the notification channel. Some features in this embodiment similar to those in the above embodiments/modifications are omitted here for brevity.

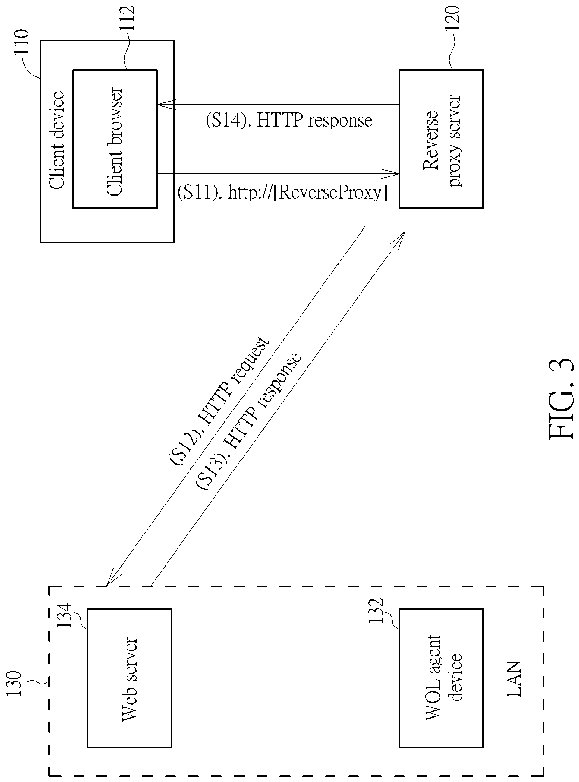

Fig. 3 is a diagram illustrating a work flow of the network system 100 shown in Fig. 1 according to an embodiment of the present invention. The reverse proxy server 120 may refer to the latest information reported by the WOL agent device 132 to decide whether to wake up the web server 134, or show the web page contents to the user through the browser 112. For example, under the situation where the web server 134 is not in the sleep or power off state, the network system 100 may perform Steps S11, S12, S13 and S14, in which Steps S11, S12, S13 and S14 shown in Fig. 3 may be viewed as operations of a web server under a normal service. For better understanding, the HyperText Transfer Protocol (HTTP) may be an example of the communications protocol adopted in at least one portion of the above steps.

In Step S11, the browser 112 may send an HTTP request (e.g. a request of reading a target web page on the web server 134) to the reverse proxy server 120. Since the browser 112 may be connected to the reverse proxy server 120 in a default manner, and access the web page (such as the web page represented by the web address "any_string.domain_name" or "domain_name/any_string") on the web server 134 through the reverse proxy server 120, Step S11 is denoted as http: //[ReverseProxy] in Fig. 3, to indicate that the HTTP request is sent by the reverse proxy server 120.

In Step S12, the reverse proxy server 120 may forward the HTTP request to the web server 134. According to this embodiment, the reverse proxy server 120 is already aware from the notification channel that the current state of the web server 134 is power on. Hence, the reverse proxy server 120 may directly forward the HTTP request to the web server 134.

In Step S13, the web server 134 may process the HTTP request, and then send back an HTTP response. The HTTP response may correspond to the HTTP request. In another example, the HTTP response may include web page data of the target web page.

In Step S14, the reverse proxy server 120 may send back the HTTP response to the browser 112. The browser 112 may refer to the HTTP response to display the latest contents of the target web page on a display module (e.g. a touch screen) of the client device 110, for the user to browse.

Based on the work flow shown in Fig. 3, the browser 112 may utilize the reverse proxy server 120 to access the web page on the web server 134, and the reverse proxy server 120 may emulate the operation of the browser 112 directly accessing the web server 134. The web server 134 and the reverse proxy server 120 will seem to be the same device to the user. Some features in this embodiment similar to those in the above embodiments/modifications are omitted here for brevity.

According to some embodiments, the aforementioned method for accusing a web server may include at least one portion of the work flow shown in Fig. 3, such as the steps shown in Fig. 3. Some features in this embodiment similar to those in the above embodiments/modifications are omitted here for brevity.

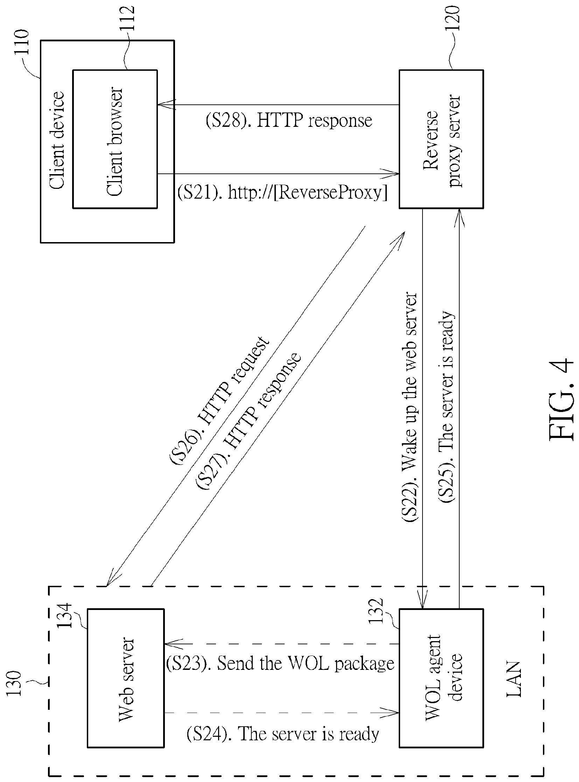

Fig. 4 is a diagram illustrating a work flow of the network system 100 shown in Fig. 1 according to another embodiment of the present invention. The reverse proxy server 120 may refer to the latest information reported by the WOL agent device 132 to decide whether to wake up the web server 134, or show the web page contents to the user through the browser 112. For example, under the situation where the web server 134 is in the sleep or power off state, the network system 100 may perform Steps S21, S22, S23, S24, S25, S26, S27 and S28, in which Steps S21, S22, S23, S24, S25, S26, S27 and S28 shown in Fig. 4 may be viewed as operations of a web server during a waking up service.

In Step S21, the browser 112 may send an HTTP request (e.g. the request of reading a target web page on the web server 134) to the reverse proxy server 120. Since the browser 112 may be connected to the reverse proxy server 120 in a default manner, and access the web page on the web server 134 through the reverse proxy server 120, such as the web page represented by the web address "any_string.domain_name" or "domain_name/any_string", Step S11 is denoted as http: //[ReverseProxy] in Fig. 3, to indicate that the HTTP request is sent through the reverse proxy server 120.

In Step S22, the reverse proxy server 120 may assign a WOL task to WOL agent device 132 in order to wake up the web server 134, in which the WOL task requests the WOL agent device 132 to wake up the web server 134. According to this embodiment, the reverse proxy server 120 is already aware from the notification channel that the current state of the web server 134 is power off. Hence, the proxy server 120 may utilize the notification channel to inform the WOL agent device 132 to perform the waking up task, such as the WOL task.

In Step S23, the WOL agent device 132 may send a WOL package, such as the WOL package mentioned above. For example, when receiving the wake up task (e.g. the WOL task), the WOL agent device 132 may broadcast the WOL package in the LAN 130.

In Step S24, the web server 134 may inform the WOL agent device 132 that the web server 134 is ready. For example, when the web server 134 is powered on and ready for receiving the HTTP request, the web server 134 may inform the WOL agent device 132 that the web server 134 is ready.

In Step S25, the WOL agent device 132 may inform the reverse proxy server 120 that the web server 134 is ready. For example, the WOL agent device 132 may utilize the notification channel to update the state of the web server 134, and more particularly, update the state of the web server 134 as the power on state, so that the reverse proxy server 120 is aware the web server 134 is ready.

In Step S26, the reverse proxy server 120 may forward the HTTP request to the web server 134. According to this embodiment, in Step S25, the reverse proxy server 120 is aware from the notification channel that the current state of the web server 134 is power on. In Step S26, the HTTP request is forwarded to the web server 134.

In Step S27, the web server 134 may process the HTTP request, and send back an HTTP response. For example, the HTTP response may correspond to the HTTP request. In another example, the HTTP response may include web page data of the target web page. In Step S28, the reverse proxy server 120 may send back the HTTP response to the browser 112. The browser 112 may refer to the HTTP response to display the latest contents of the target web page on the display module (the touch screen) of the client device 110, for the user to browse.

Based on the work flow shown in Fig. 4, the subsystem 100W may automatically power on to wake up the web server 134, and the browser 112 is not involved in operations of waking up the web server 134. The browser 112 does not need to continuously perform polling upon the web server 134. Further, based on the work flow shown in Fig. 4, the browser 112 may utilize the reverse proxy server 120 to automatically power on for accessing the web page on the web server 134, and the reverse proxy server 120 may emulate the operation of the browser 112 directly accessing the web server 134. To the user, the web server 134 and the reverse proxy server 120 will seem to be the same device. Some features in this embodiment similar to those in the above embodiments/modifications are omitted here for brevity.

According to some embodiments, the aforementioned method for accessing a web server may include executing at least one portion of the work flow shown in Fig. 4, such as the steps shown in Fig. 4. Some features in this embodiment similar to those in the above embodiments/modifications are omitted here for brevity.

According to some embodiments, the reverse proxy server 120 will not include any information of the web server 134 other than the position information (e.g. the IP address and MAC address) and the operating state/non-operating state (e.g. the power on/off state) of the web server 134. For example, the reverse proxy server 120 only needs to store or obtain the position information (e.g. the IP address and MAC address) and the operating state/non-operating state (e.g. the power on/off state) of the web server 134, and will not store any web page or multimedia contents related to the web server 134.

According to some embodiments, the web server 134 may only be configured in an Intranet, such as the LAN 130. For example, in an embodiment, the web server 134 does not directly communicate with the client device 110. In another example, when the web server 134 and the reverse proxy server 120 are both in the Intranet, the web server 134 will not directly be connected to a wide area network (WAN), i.e. the web server 134 will indirectly be connected to the WAN through the reverse proxy server 120. Since the WAN and the web server 134 cannot be directly connected to each other, the possibility of the web server 134 being invaded can thus be reduced.

According to some embodiments, the subsystem 100W may include at least one control circuit for controlling operations of the subsystem 100W. For example, the WOL agent device 132 may include a control circuit for controlling operations of the WOL agent device 132. In another example, the reverse proxy server 120 may include a control circuit for controlling operations of the reverse proxy server 120. In yet another example, the reverse proxy server 120 and the WOL agent device 132 may be integrated as one electronic device which is configured in the LAN 130, in which the electronic device may include a control circuit for controlling operations of the electronic device. Examples of the control circuit may include (but are not limited to): a processor and application-specific integrated circuit (ASIC). Some features in this embodiment similar to those in the above embodiments/modifications are omitted here for brevity.

To the client device 110, under the situation where the web server 134 is in the non-operating state (e.g. sleep state or power off state), the operations of the browser 112 are similar to those of browsing a common web page. The web server 134 does not need to be woken up first to perform polling, therefore avoiding the need for repeated retry operations. Further, it is unnecessary to install additional applications on the client device 110 and apply complicated settings, as the client device 110 can be triggered to wake up through the Internet. Since the browser 112 may utilize the reverse proxy server 120 to automatically power on for accessing the web page on the web server 134, and the reverse proxy server 120 may emulate operations of the browser 112 directly accessing the web server 134, the web server 134 and the reverse proxy server 120 appear to be the same device to the user. The user may directly input the predetermined domain on the web address bar for accessing the web server 134 without being concerned with the existence of the subsystem 100W.

The method and associated apparatus of the present invention therefore effectively raise overall efficiency without the need to constantly performing polling, preventing wasting of network bandwidth.

## Claims

1. A method for accessing a web server (134), where the web server (134) is in a local area network, hereinafter LAN, the method **characterized by**:
utilizing a wake-on-LAN agent device, hereinafter WOL agent device (132), to obtain web server information of the web server (134) and send the web server information to a reverse proxy server (120), wherein the WOL agent device (132) is in the LAN, and the web server information comprises at least one state of the web server (134); and
when the reverse proxy server (120) receives a request from a client device (110), utilizing the reverse proxy server (120) to determine whether to assign a WOL task to the WOL agent device (132) according to the at least one state of the web server (134), wherein the client device (110) is external to the LAN, and the WOL task comprises waking up the web server (134);
wherein the client device (110) sends the request to the reverse proxy server (120), in order to access the web server (134) through the reverse proxy server (120).

2. The method of claim 1, **characterized in that** the method further comprises:
creating a notification channel (100W) between the WOL agent device (132) and the reverse proxy server (120) for performing a web server information updating operation through the notification channel (100W), wherein the web server information updating operation comprises updating the web server information.

3. The method of claim 1, **characterized in that** the request is arranged to access a target web page of the web server (134); and the method further comprises:
when a latest state of the web server (134) indicates that the web server (134) is ready, utilizing the reverse proxy server (120) to forward the request to the web server (134) in order to obtain a response corresponding to the request, and providing the response to the client device (110) for the client device (110) to display the target web page.

4. The method of claim 1, **characterized in that** at least one state of the web server (134) comprises a non-operating state; and the method further comprises:
when the web server information indicates that the web server (134) is in the non-operating state, utilizing the reverse proxy server (120) to assign the WOL task to the WOL agent device (132).

5. The method of claim 4, **characterized in that** the request is arranged to access a target web page of the web server (134), and the method further comprises:
after the reverse proxy server (120) assigns the WOL task to the WOL agent device (132), when the latest state of the web server (134) indicates that the web server (134) is ready, utilizing the reverse proxy server (120) to forward the request to the web server (134) in order to obtain a response corresponding to the request, and providing the response to the client device (110) for the client device (110) to display the target web page.

6. The method of claim 1, **characterized in that** the method further comprises:
creating a notification channel (100W) between the WOL agent device (132) and the reverse proxy server (120) to allow the reverse proxy server (120) to assign the WOL task to the WOL agent device (132) through the notification channel (100W).

7. The method of claim 6, **characterized in that** the web server information further comprises a media access control address of the web server (134), and the method further comprises:
when the reverse proxy server (120) assigns the WOL task assign to the WOL agent device (132), utilizing the reverse proxy server (120) to inform the WOL agent device (132) of the media access control address of the web server (134) through the notification channel (100W) in order to indicate that the WOL agent device (132) needs to wake up the web server (134) in the WOL task.

8. The method of claim 1, **characterized in that** the web server information further comprises an Internet protocol address, hereinafter IP address, of the web server (134), and the method further comprises:
when the client device (110) accesses the web server (134) through the reverse proxy server (120), the reverse proxy server (120) sends the request to the web server (134) according to the IP address of the web server (134).

9. The method of claim 1, **characterized in that** the request is a HyperText Transfer Protocol request, hereinafter HTTP request, and a browser (112) executed on the client device (110) sends the HTTP request to the reverse proxy server (120) in order to access the web server (134) through the reverse proxy server (120).

10. An apparatus operating according to claim 1, **characterized in that** the apparatus comprises at least one portion of a subsystem of a network system, wherein the network system comprises the client device (110), the reverse proxy server (120) and the LAN, and the subsystem comprises the WOL agent device (132) and the reverse proxy server (120).

11. An apparatus for accessing a web server (134), the web server (134) being in a local area network, hereinafter LAN, the apparatus **characterized by**:
at least one control circuit, positioned in a subsystem of a network system, wherein the subsystem comprises wake-on-LAN agent device, hereinafter WOL agent device (132), and a reverse proxy server (120), the WOL agent device (132) is in the LAN, and the control circuit is arranged to control operations of at least one of the WOL agent device (132) and the reverse proxy server (120);
wherein the WOL agent device (132) obtains web server information of the web server (134), and sends the web server information to the reverse proxy server (120), the web server information comprises at least one state of the web server (134), and when the reverse proxy server (120) receives a request from a client device (110), the reverse proxy server (120) refers to the state of the web server (134) to decide whether to assign a WOL task to the WOL agent device (132), wherein the client device (110) is external to the LAN, the WOL task comprises waking up the web server (134), and the client device (110) sends the request to the reverse proxy server (120) in order to access the web server (134) through the reverse proxy server (120).

12. The apparatus of claim 11, **characterized in that** under the control of the control circuit, the WOL agent device (132) and the reverse proxy server (120) create a notification channel (100W) between the WOL agent device (132) and the reverse proxy server (120), for performing a web server information updating operation through the notification channel (100W), wherein the web server information updating operation comprises updating the web server information.

13. The apparatus of claim 11, **characterized in that** the request is arranged to access a target web page of the web server (134), and when a latest state of the web server (134) indicates that the web server (134) is ready, the reverse proxy server (120) forwards the request to the web server (134) in order to obtain a response corresponding to the request, and provides the response to the client device (110) for the client device (110) to display the target web page.

14. The apparatus of claim 11, **characterized in that** at least one state of the web server (134) comprises a non-operating state, and when the web server information indicates that the web server (134) is in the non-operating state, the reverse proxy server (120) assigns the WOL task to the WOL agent device (132).

15. The apparatus of claim 14, **characterized in that** the request is arranged to access a target web page of the web server (134), and after the reverse proxy server (120) assigns the WOL task to the WOL agent device (132), when the latest state of the web server (134) indicates that the web server (134) is ready, the reverse proxy server (120) forwards the request to the web server (134) in order to obtain a response corresponding to the request, and provides the response to the client device (110) for the client device (110) to display the target web page.
